# FASCICULE DE BREVET EUROPEEN

(11) **EP 1 397 571 B1**
(45) Date de publication et mention de la délivrance du brevet: **19.10.2005**
(21) Numéro de dépôt: 02751269.8
(22) Date de dépôt: 18.06.2002
(51) Int. Cl.: E05B 1/00

(54) **DISPOSITIF A CREMONE A STRUCTURE SIMPLIFIEE**
STANGENVERSCHLUSS MIT VEREINFACHTER STRUKTUR
DEVICE WITH A BASCULE OF SIMPLIFIED STRUCTURE

(30) Priorité: 18.06.2001 FR 0107990; 11.07.2001 FR 0109228
(43) Date de publication de la demande: 17.03.2004
(73) Titulaire: POMMIER, 95310 Saint-Quen l'Aumone (FR)
(72) Inventeur: FROISSARD, Alain, F-95110 Sannois (FR)
(74) Mandataire: Coester, Jacques Charles
(86) Numéro de dépôt international: PCT/FR2002/002099
(87) Numéro de publication internationale: WO 2002/103140

(56) Documents cités:
- EP-A- 0 953 496
- EP-A- 1 201 854
- DE-U- 20 012 724
- FR-A- 2 743 105
- US-A- 2 861 830
- PATENT ABSTRACTS OF JAPAN vol. 017, no. 641 (M-1516), 29 novembre 1993 (1993-11-29) -& JP 05 202650 A (HINO SHATAI KOGYO KK), 10 août 1993 (1993-08-10)

## Description

La présente invention concerne, de façon générale, un dispositif de verrouillage du type à crémone, notamment utilisable pour la fermeture des portes battantes de conteneurs, de véhicules utilitaires, ou de tout autre volume fermé.

Plus précisément, l'invention concerne un dispositif de verrouillage à crémone destiné à la fermeture d'un battant articulé sur un cadre, ce dispositif comprenant une platine solidaire du cadre, une barre montée à rotation sur elle-même par rapport au battant, un corps fixé transversalement sur la barre, une poignée montée pivotante sur le corps autour d'un axe, et un crochet, la platine portant une gâche principale et une gâche auxiliaire, le crochet étant commandé par la poignée pour adopter sélectivement, pour une première position de la poignée, une position de verrouillage dans laquelle ce crochet est verrouillé sur la gâche auxiliaire et bloque la barre et le corps en rotation, et, pour une seconde position de la poignée, une position de dégagement dans laquelle ce crochet est dégagé de la gâche auxiliaire et permet une rotation de la barre et du corps, le corps étant terminé par un pêne adoptant lui-même sélectivement, en fonction de la rotation de la barre, une position de verrouillage dans laquelle il est engagé dans la gâche principale, et une position de dégagement dans laquelle il est dégagé de la gâche principale.

Des dispositifs de ce type sont connus dans l'art antérieur, le document EP 0 953 496 A décrit un dispositif présentant les caractéristiques du préambule de la revendication 1. D'autres exemples de dispositifs relativement voisins sont donnés dans les documents de brevet EP 0 362 060 A ou JP 05202650 A.

De façon générale, la conception de tout nouveau dispositif de ce type doit résoudre le compromis que représente l'obtention d'une sécurité de verrouillage élevée malgré le recours à une structure aussi simple que possible.

La présente invention s'inscrit précisément dans ce contexte, et a pour but de proposer un dispositif apportant une solution élégante et efficace à ce compromis.

A cette fin, le dispositif de l'invention, par ailleurs conforme à la définition générique qu'en donne le préambule ci-dessus, est caractérisé en ce que le crochet est lui-même monté pivotant sur le corps autour de l'axe de pivotement de la poignée, sans être solidaire de la poignée.

Pour ce faire, il est possible de faire en sorte que le crochet soit disposé, le long de l'axe de pivotement qu'il partage avec la poignée, entre deux pattes latérales de la poignée.

Dans le mode de réalisation préféré de l'invention, le crochet est élastiquement sollicité vers sa position de verrouillage, par exemple au moyen d'un ressort reliant le crochet au corps et travaillant en traction.

Le crochet et la poignée peuvent présenter des talons respectifs, ces talons étant au moins en contact mutuel lorsque la poignée passe de sa première position à sa seconde position.

D'autre part, le corps et la poignée présentent avantageusement une première paire de butées respectives, bloquant la poignée en rotation par rapport au corps dans un premier sens, et une seconde paire de butées respectives, bloquant la poignée en rotation par rapport au corps dans un second sens.

La poignée présente ainsi, par rapport au corps, un débattement angulaire limité, qui inclut les première et seconde positions de la poignée et qui est avantageusement de l'ordre de 30 degrés.

Les butées de la poignée sont par exemple formées par les bords d'une échancrure, et les butées du corps par les côtés d'un pion intégré à ce corps.

La gâche principale peut être conformée en bouton et le pêne en fourchette pour pouvoir enserrer la base du bouton.

Enfin, le dispositif de l'invention comprend de préférence un ressort précontraint en compression entre le crochet et la poignée et exerçant sur le crochet et la poignée des couples de sens inverses autour de l'axe de pivotement, et se neutralisant mutuellement par le contact mutuel des talons respectifs du crochet et de la poignée.

D'autres caractéristiques et avantages de l'invention ressortiront clairement de la description qui en est faite ci-après, à titre indicatif et nullement limitatif, en référence aux dessins annexés, dans lesquels:
- la Figure 1 est une vue de dessus du dispositif de verrouillage selon un mode préféré de l'invention représenté en position de verrouillage;
- la Figure 2 est une vue en coupe du dispositif de verrouillage illustré à la Figure 1, la coupe étant réalisée et observée suivant l'incidence définie par les flèches II-II de la Figure 1;
- la Figure 3 est une vue en coupe semblable à celle de la Figure 2, mais sur laquelle le dispositif de verrouillage illustré est représenté en phase de déverrouillage, son crochet étant représenté en position de dégagement;
- la Figure 4 est une vue en coupe partielle du dispositif de verrouillage représenté en phase de verrouillage succédant à un déverrouillage, la partie gauche de ce dispositif étant représentée de l'extérieur;
- la Figure 5 est une vue en coupe partielle de détail du dispositif de verrouillage illustré à la Figure 1, la coupe étant réalisée et observée suivant l'incidence définie par les,flèches V-V de la Figure 1, la poignée étant représentée dans sa première position;
- la Figure 6 est une vue en coupe partielle et agrandie du détail du dispositif de verrouillage qu'illustre la Figure 5, la poignée étant représentée dans sa seconde position;
- la Figure 7 est une vue en perspective du dispositif de verrouillage, représenté en position de verrouillage ;
- la Figure 8 est une vue en coupe du dispositif, observé suivant l'incidence définie par les lignes VIII-VIII de la figure 2 ; et
- la Figure 9 est une vue en coupe partielle agrandie d'un détail d'un dispositif conforme à une variante de réalisation de l'invention.

Comme annoncé précédemment, l'invention concerne un dispositif de verrouillage à crémone destiné à la fermeture d'un battant articulé sur un cadre, tel qu'un ouvrant de conteneur ou de véhicule utilitaire.

Ce dispositif comprend principalement une platine 1 solidaire du cadre, une barre 2 montée à rotation sur elle-même par rapport au battant, un corps 3 fixé transversalement sur la barre 2, une poignée 4 montée pivotante sur le corps 3 autour d'un axe 5, et un crochet 6.

La platine 1 porte une gâche principale 11, par exemple conformée en bouton, et une gâche auxiliaire 12 prenant la forme d'un mentonnet porté par une extrémité de cette platine.

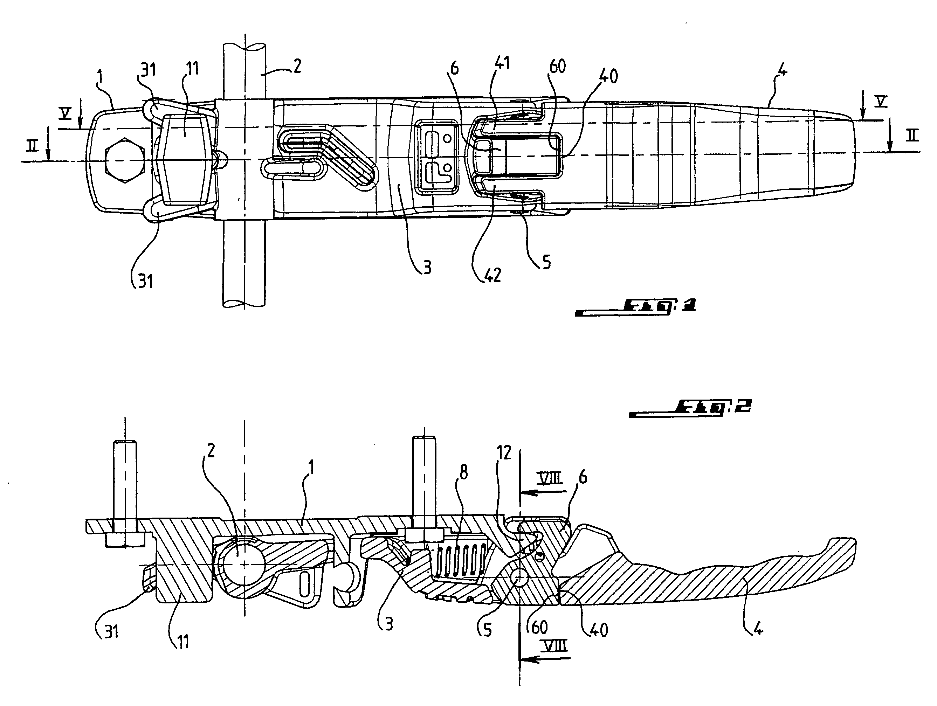

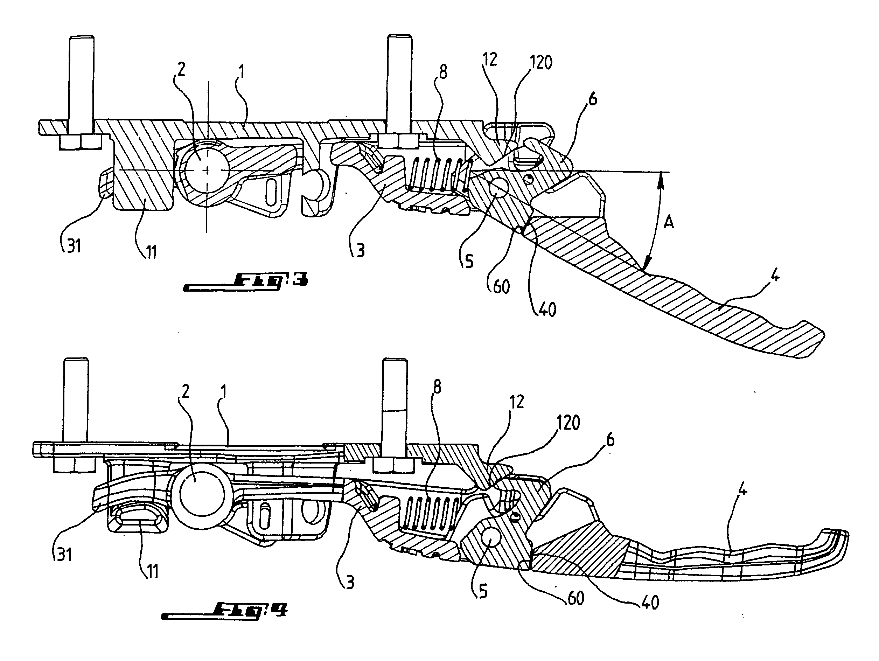

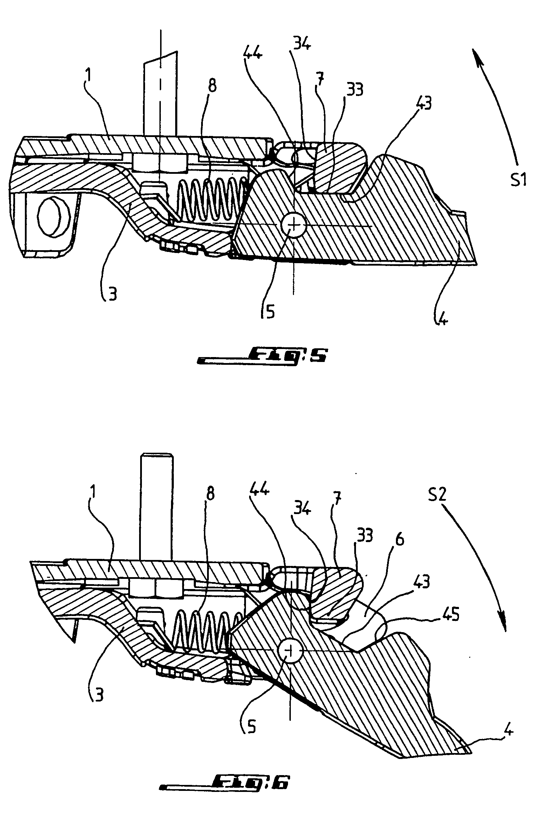

Le crochet 6 est commandé par la poignée 4 entre deux positions, à savoir une position de verrouillage illustrée à la figure 2, et une position de dégagement illustrée à la figure 3.

La position de verrouillage du crochet 6 est obtenue pour une position de la poignée 4 dans laquelle cette poignée est sensiblement alignée avec le corps 3, tandis que la position de dégagement du crochet 6 est obtenue pour une position de la poignée 4 dans laquelle cette poignée est désalignée par rapport au corps 3.

Dans sa position de verrouillage, le crochet 6 est verrouillé sur la gâche auxiliaire 12 et bloque la barre 2 et le corps 3 en rotation, tandis que, dans sa position de dégagement, le crochet 6 est dégagé de la gâche auxiliaire 12 et permet une rotation de la barre 2 et du corps 3.

Le corps est terminé par un pêne 31 qui adopte lui-même, en fonction de la rotation de la barre 2, une position de verrouillage dans laquelle ce pêne 31 est engagé dans la gâche principale 11, et une position de dégagement (non illustrée) dans laquelle ce pêne est dégagé de la gâche principale 11.

Si la gâche principale 11 est conformée en bouton, le pêne 31 est avantageusement conformé en fourchette pour pouvoir enserrer la base du bouton dans sa position de verrouillage.

Selon l'invention, le crochet 6 est monté pivotant sur le corps 3 en partageant l'axe de pivotement 5 de la poignée 4, mais sans être solidaire de cette poignée 4.

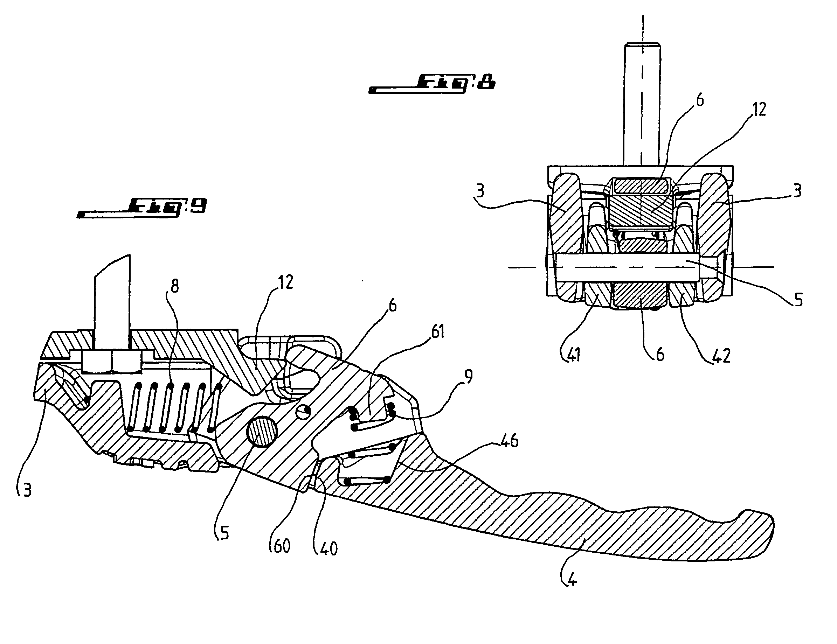

Par exemple, comme le montrent les figures 1 et 7, le crochet 6 est disposé, le long de l'axe de pivotement 5, entre deux pattes latérales 41 et 42 de la poignée 4 sans être liée latéralement à cette poignée.

Un ressort 8, travaillant en traction, relie le crochet 6 au corps 3, le crochet 6 étant ainsi en permanence sollicité élastiquement vers sa position de verrouillage.

Le crochet 6 et la poignée 4 présentent des talons respectifs 60 et 40, qui assurent, entre ce crochet et cette poignée, transversalement à l'axe 5, une liaison d'appui dans un seul sens.

Plus précisément, le crochet 6 et la poignée 4 sont au moins en contact mutuel par leurs talons 60 et 40 lorsque la poignée 4 passe de sa position alignée sur le corps (figure 2) à sa position désalignée (figure 3), ce contact résultant de la sollicitation élastique que subit le crochet 6 autour de l'axe 5 de la part du ressort 8.

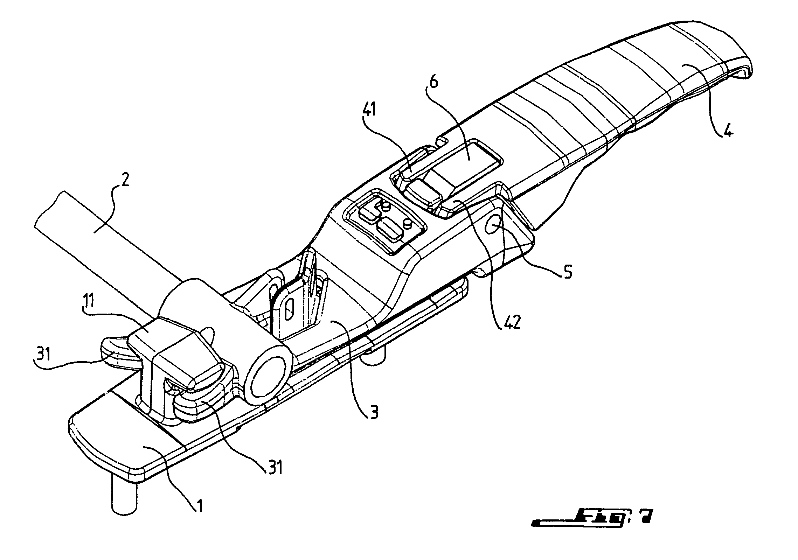

La poignée 4 (figures 5 et 6) présente une échancrure 45 dont les bords forment des butées 43 et 44.

De son côté, le corps 3 est équipé d'un pion 7 dont les bords forment des butées 33 et 34 en regard des butées 43 et 44 de la poignée 4.

Lorsque la poignée 4 subit par rapport au corps 3 une rotation suivant le sens indiqué par la flèche S1 de la figure 5, les butées constituées par la paire de butées 33 et 43 bloquent la poignée 4 en rotation par rapport au corps 3 dans le sens S1.

Et lorsque la poignée 4 subit par rapport au corps 3 une rotation suivant le sens indiqué par la flèche S2 de la figure 6, les butées constituées par la paire de butées 34 et 44 bloquent la poignée 4 en rotation par rapport au corps 3 dans le sens S2.

La poignée 4 présente ainsi, par rapport au corps 3, un débattement angulaire limité A, de l'ordre de 30 degrés par exemple, juste suffisant pour pouvoir déplacer le crochet 6 entre sa position de verrouillage et sa position de dégagement.

Le fonctionnement du dispositif tel que décrit jusqu'à présent est le suivant.

Lorsque le dispositif est verrouillé (figure 2), il peut être aisément déverrouillé par traction sur la poignée 4, c'est-à-dire par rotation de la poignée autour de l'axe 5 dans le sens S2.

Lors de sa rotation, la poignée 4 pousse, par son talon 40, le talon 60 du crochet 6 qui subit ainsi lui-même une rotation de sens S2 autour de l'axe 5 (figure 6), à l'encontre de la force de rappel exercée sur ce crochet par le ressort 8.

Le crochet 6 se dégage alors de la gâche auxiliaire 12 (figure 3).

A ce moment, ou après une rotation supplémentaire de faible amplitude, la poignée 4 vient en contact avec le corps 3 par contact mutuel des butées 34 et 44 (figure 6), de sorte qu'elle peut dans le même mouvement assurer la rotation du corps 3 et de la barre 2 autour de l'axe de cette dernière dans le sens S2.

Le pêne 31 se dégage alors de la gâche principale 11.

Dès que la poignée 4 est relâchée, elle revient en alignement avec le corps 3 grâce à la force de rappel exercée par le ressort 8 sur le crochet 6 et transmise à la poignée 4 par le contact des talons 60 et 40.

Lorsque le dispositif doit à nouveau être verrouillé, le pêne 31 est engagé dans la gâche principale 11, et la poignée 4 est sollicitée en rotation autour de l'axe 5 dans le sens S1 (figure 5).

La poignée 4 vient en contact avec le corps 3 par contact mutuel des butées 33 et 43 (figure 5), de sorte qu'elle peut dans le même mouvement assurer la rotation du corps 3 et de la barre 2 autour de l'axe de cette dernière dans le sens S1.

Le crochet 6, qui rencontre le bord externe en pente 120 de la gâche auxiliaire 12 (figure 4), et poussé par l'axe,5, subit un couple de rotation dans le sens S2, supérieur à celui que le ressort 8 exerce sur ce crochet par rapport à l'axe 5.

Dans ces conditions, le talon 60 du crochet 6 se décolle du talon 40 de la poignée 4, et le crochet 6 s'engage à nouveau dans la gâche auxiliaire 12, le verrouillage étant terminé.

La figure 9 illustre une variante de réalisation, permettant d'augmenter encore la fiabilité du dispositif décrit jusqu'à présent.

En effet, dans le cas où le dispositif est refermé en claquant le battant articulé vers le cadre, il n'est pas exclu que le crochet 6 ne s'engage que de façon partielle dans la gâche auxiliaire 12, adoptant la position spontanément réversible et donc non sécurisée qu'illustre la figure 9.

Cette situation peut passer inaperçue si la poignée 4, qui est alors libre en rotation autour de l'axe de pivotement 5 par rapport au crochet 6, s'aligne plus ou moins avec le corps 3.

La variante illustrée à la figure 9 permet d'éviter qu'un tel verrouillage imparfait puisse passer inaperçu.

Dans cette variante, le dispositif comprend un ressort 9 précontraint en compression et disposé entre le crochet 6 et la poignée 4.

Le ressort 9 exerce ainsi, sur le crochet 6 et la poignée 4, des couples de sens inverses autour de l'axe de pivotement 5, qui se neutralisent l'un l'autre par le contact mutuel des talons respectifs, 60 et 40, du crochet 6 et de la poignée 4.

Dans ces conditions, tout défaut de verrouillage du crochet 6 sur la gâche auxiliaire 12 empêche nécessairement la poignée 4 de s'aligner sur le corps 3.

Et dans la mesure où il est ainsi rendu bien visible, ce défaut peut aisément être corrigé.

## Revendications

1. Dispositif de verrouillage à crémone destiné à la fermeture d'un battant articulé sur un cadre, tel qu'un ouvrant de conteneur ou de véhicule utilitaire, ce dispositif comprenant une platine (1) solidaire du cadre, une barre (2) montée à rotation sur elle-même par rapport au battant, un corps (3) fixé transversalement sur la barre (2), une poignée (4) montée pivotante sur le corps (3) autour d'un axe (5), et un crochet (6), la platine (1) portant une gâche principale (11) et une gâche auxiliaire (12), le crochet (6) étant commandé par la poignée (4) pour adopter sélectivement, pour une première position de la poignée (4), une position de verrouillage dans laquelle ce crochet (6) est verrouillé sur la gâche auxiliaire (12) et bloque la barre (2) et le corps (3) en rotation, et, pour une seconde position de la poignée (4), une position de dégagement dans laquelle ce crochet (6) est dégagé de la gâche auxiliaire (12) et permet une rotation de la barre (2) et du corps (3), le corps (3) étant terminé par un pêne (31) adoptant lui-même sélectivement, en fonction de la rotation de la barre (2), une position de verrouillage dans laquelle il est engagé dans la gâche principale (11), et une position de dégagement dans laquelle il est dégagé de la gâche principale (11), **caractérisé en ce que** le crochet (6) est lui-même monté pivotant sur le corps (3) autour de l'axe de pivotement (5) de la poignée (4), sans être solidaire de la poignée (4).

2. Dispositif de verrouillage à crémone suivant la revendication 1, **caractérisé en ce que** le crochet (6) est disposé, le long de l'axe de pivotement (5) qu'il partage avec la poignée (4), entre deux pattes latérales (41, 42) de la poignée (4).

3. Dispositif de verrouillage à crémone suivant l'une quelconque des revendications 1 à 2, **caractérisé en ce que** le crochet (6) est élastiquement sollicité vers sa position de verrouillage.

4. Dispositif de verrouillage à crémone suivant l'une quelconque des revendications précédentes, **caractérisé en ce que** le crochet (6) et la poignée (4) présentent des talons respectifs (60, 40) et **en ce que** ces talons (60, 40) sont au moins en contact mutuel lorsque la poignée (4) passe de sa première position à sa seconde position.

5. Dispositif de verrouillage à crémone suivant l'une quelconque des revendications précédentes, **caractérisé en ce que** le corps (3) et la poignée (4) présentent une première paire de butées respectives (33, 43), bloquant la poignée (4) en rotation par rapport au corps (3) dans un premier sens (S1), et une seconde paire de butées respectives (34, 44), bloquant la poignée (4) en rotation par rapport au corps (3) dans un second sens (S2), la poignée (4) présentant ainsi, par rapport au corps (3), un débattement angulaire limité (A) incluant ses première et seconde positions.

6. Dispositif de verrouillage à crémone suivant la revendication 5, **caractérisé en ce que** le débattement angulaire (A) de la poignée est de l'ordre de 30 degrés.

7. Dispositif de verrouillage à crémone suivant la revendication 5 ou 6, **caractérisé en ce que** les butées (43, 44) de la poignée (4) sont formées par les bords d'une échancrure (45).

8. Dispositif de verrouillage à crémone suivant l'une quelconque des revendications 5 à 7, **caractérisé en ce que** les butées (33, 34) du corps (3) sont formées par les côtés d'un pion (7).

9. Dispositif de verrouillage à crémone suivant l'une quelconque des revendications précédentes, **caractérisé en ce qu'**il comprend un ressort (8) reliant le crochet (6) au corps (3) et travaillant en traction.

10. Dispositif de verrouillage à crémone suivant l'une quelconque des revendications précédentes, **caractérisé en ce que** la gâche principale (11) est conformée en bouton et **en ce que** le pêne (31) est conformé en fourchette enserrant sélectivement la base du bouton.

11. Dispositif de verrouillage à crémone suivant l'une quelconque des revendications précédentes combinée à la revendication 4, **caractérisé en ce qu'**il comprend un ressort (9) précontraint en compression entre le crochet (6) et la poignée (4) et exerçant sur le crochet (6) et la poignée (4) des couples de sens inverses autour de l'axe de pivotement (5), se neutralisant mutuellement par le contact mutuel des talons respectifs (60, 40) du crochet (6) et de la poignée (4).

## Patentansprüche

1. Verriegelungsvorrichtung mit Schubstangenriegel zum Verschließen eines an einem Rahmen gelenkig angebrachten Schwenkflügels, wie beispielsweise der Schwenktür eines Behälters oder eines Nutzfahrzeugs, wobei diese Vorrichtung eine fest mit dem Rahmen verbundene Platte (1), einen Stab (2), der so befestigt ist, dass um ihn in Bezug zum Schwenkflügel eine Drehung ausgeführt werden kann, einen quer am Stab (2) befestigten Körper (3), einen um eine Achse (5) schwenkbar montierten Handgriff (4) und einen Haken (6) umfasst, wobei die Platte (1) einen Hauptschließhaken (11) und einen Hilfsschließhaken (12) trägt und der Haken (6) durch den Handgriff (4) so gesteuert wird, dass er wahlweise in einer ersten Stellung des Handgriffs (4) eine Verriegelungsstellung einnimmt, in welcher dieser Haken (6) am Hilfsschließhaken (12) verriegelt ist und den Stab (2) und den Körper (3) in der Drehung blockiert, und in einer zweiten Stellung des Handgriffs (4), eine der Freigabestellungen einnimmt, in welcher dieser Haken (6) vom Hilfsschließhaken (12) frei gegeben wird und eine Drehung des Stabes (2) und des Körpers (3) zulässt, wobei der Körper (3) in einem Schlossriegel (31) endet, welcher selbst wahlweise in Abhängigkeit von der Drehung des Stabes (2) eine Verriegelungsstellung einnimmt, in welcher er im Hauptschließhaken (11) eingerastet ist, oder eine Freigabestellung, in welcher er aus dem Hauptschließhaken (11) ausgeklinkt ist, **dadurch gekennzeichnet, dass** dieser Haken (6) selbst am Körper (3) um die Schwenkachse (5) des Handgriffs (4) schwenkbar befestigt ist, ohne mit dem Handgriff (4) fest verbunden zu sein.

2. Verriegelungsvorrichtung mit Schubstangenriegel gemäß Anspruch 1, **dadurch gekennzeichnet, dass** der Haken (6) längs der Schwenkachse (5) angeordnet ist, die er mit dem Handgriff (4) zwischen zwei seitlichen Schließbändern (41, 42) des Handgriffs (4) teilt.

3. Verriegelungsvorrichtung mit Schubstangenriegel gemäß einem der Ansprüche 1 bis 2, **dadurch gekennzeichnet, dass** der Haken (6) mittels Federwirkung in Richtung seiner Verriegelungsstellung gedrückt ist.

4. Verriegelungsvorrichtung mit Schubstangenriegel gemäß einem der vorangehenden Ansprüche, **dadurch gekennzeichnet dass** der Haken (6) und der Handgriff (4) jeweils miteinander korrespondierende Vorsprünge (60, 40) aufweisen, und **dadurch**, dass diese Vorsprünge (60, 40) sich mindestens dann in wechselseitiger Anlage befinden, wenn der Handgriff (4) von seiner ersten Stellung in seine zweite Stellung überführt ist.

5. Verriegelungsvorrichtung mit Schubstangenriegel gemäß einem der vorangehenden Ansprüche, **dadurch gekennzeichnet dass** der Körper (3) und der Handgriff (4) ein erstes Paar von jeweils zusammen wirkenden Anschlägen (33, 43) aufweist, welche den Handgriff (4) beim Drehen in Bezug auf den Körper (3) in einer ersten Richtung (S1) blockieren, sowie ein zweites Paar von jeweils zusammen wirkenden Anschlägen (34, 44), welche den Handgriff (4) beim Drehen in Bezug auf den Körper (3) in einer zweiten Richtung (S2) blockieren, wobei der Handgriff (4) somit in Bezug auf den Körper (3) eine begrenzte Winkelauslenkung (A) unter Einschluss seiner ersten und zweiten Stellung aufweist.

6. Verriegelungsvorrichtung mit Schubstangenriegel gemäß Anspruch 5, **dadurch gekennzeichnet, dass** die Winkelauslenkung (A) des Handgriffs in der Größenordnung von 30 Grad liegt.

7. Verriegelungsvorrichtung mit Schubstangenriegel gemäß Anspruch 5 oder 6, **dadurch gekennzeichnet, dass** die Anschläge (43, 44) des Handgriffs (4) durch die Ränder einer Aussparung (45) gebildet werden.

8. Verriegelungsvorrichtung mit Schubstangenriegel nach einem der vorangehenden Ansprüche, **dadurch gekennzeichnet, dass** die Anschläge (33, 34) des Körpers (3) durch die Seiten eines Stifts (7) gebildet werden.

9. Verriegelungsvorrichtung mit Schubstangenriegel nach einem der vorangehenden Ansprüche, **dadurch gekennzeichnet, dass** sie eine Feder (8) umfasst, welche den Haken (6) mit dem Körper (3) verbindet und auf Zug arbeitet.

10. Verriegelungsvorrichtung mit Schubstangenriegel nach einem der vorangehenden Ansprüche, **dadurch gekennzeichnet, dass** der Hauptschlossriegel (11) als Knopf ausgebildet ist, und **dadurch**, dass der Schlossriegel (31) als Gabel ausgebildet ist, welche wahlweise den Grundbereich des Knopfes umfasst.

11. Verriegelungsvorrichtung mit Schubstangenriegel nach einem der vorangehenden Ansprüche in Verbindung mit Anspruch 4, **dadurch gekennzeichnet, dass** sie zwischen dem Haken (6) und dem Handgriff (4) eine auf Druck vorgespannte Feder (9) umfasst, welche auf den Haken (6) und den Handgriff (4) um die Drehachse Kräftepaare mit entgegengesetzter Richtung (5) ausübt, die sich gegenseitig durch den gegenseitigen Kontakt der jeweils zugehörigen Vorsprünge (60, 40) des Hakens (6) und des Handgriffs (4) aufheben.

## Claims

1. Locking device with a bascule provided for the closing of a door leaf articulated on a frame, such as an openable portion of a container or a service vehicle, this device comprising a plate (1) fixed to the frame, a bar (2) rotatively mounted on itself with respect to the openable portion, a body (3) fixed transversely onto the bar (2), a handle (4) pivotally mounted onto the body (3) around a pin (5), and a hook (6), the plate (1) carrying a primary keeper (11) and an auxiliary keeper (12), the hook (6) being controlled by the handle (4) for selectively adopting, for a first position of the handle (4), a locking position in which this hook (6) is locked onto the auxiliary keeper (12) and immobilizes the bar (2) and body (3) in rotation and, for a second position of the handle (4), a disengaging position in which this hook (6) is disengaged from the auxiliary keeper (12) and permits a rotation of the bar (2) and body (3), the body (3) being terminated by a latch (31) adopting itself selectively, in function of the rotation of the bar (2), a locking position in which it is engaged into the primary keeper (11), and a disengaging position in which it is disengaged from the primary keeper (11), **characterized in that** the hook (6) is itself pivotally mounted on the body (3) around the pivoting pin (5) of the handle (4), without being fixed to the handle (4).

2. Locking device with a bascule according to claim 1, **characterized in that** the hook (6) is arranged, along the pivoting pin (5) which it shares with the handle (4), between two side lugs (41, 42) of the handle (4).

3. Locking device with a bascule according to any one of claims 1 to 2, **characterized in that** the hook (6) is resiliently biased towards its locking position.

4. Locking device with a bascule according to any one of the preceding claims, **characterized in that** the hook (6) and handle (4) have respective heels (60, 40) and **in that** these heels (60, 40) are at least in mutual contact when the handle (4) runs from its first position to its second position.

5. Locking device with a bascule according to any one of the preceding claims, **characterized in that** the body (3) and handle (4) have a first pair of respective abutments (33, 43) that immobilize the handle (4) in rotation with respect to the body (3) in a first direction (S1) and a second pair of respective abutments (34, 44) that immobilize the handle (4) in rotation with respect to the body (3) in a second direction (S2), the handle (4) having therefore, with respect to the body (3), a limited angular clearance (A) including its first and second positions.

6. Locking device with a bascule according to claim 5, **characterized in that** the angular clearance (A) of the handle is about 30 degrees.

7. Locking device with a bascule according to claim 5 or 6, **characterized in that** the abutments (43, 44) of the handle (4) are formed by edges of a cut-out portion (45).

8. Locking device with a bascule according to any one of claims 5 to 7, **characterized in that** the abutments (33, 34) of the body (3) are formed by sides of a slug (7).

9. Locking device with a bascule according to any one of the preceding claims, **characterized in that** it comprises a spring (8) which connects the hook (6) with the body (3) and works in traction.

10. Locking device with a bascule according to any one of the preceding claims, **characterized in that** the primary keeper (11) is button-shaped, and **in that** the latch (31) is fork-shaped while selectively encompassing the bottom portion of the button.

11. Locking device with a bascule according to any one of the preceding claims combined with claim 4, **characterized in that** it comprises a spring (9) which is pre-stressed in compression between the hook (6) and handle (4) and which forms, on the hook (6) and handle (4), torques in opposite direction around the pivoting pin (5), which torques are mutually compensating each other by a mutual contact of the respective heels (60, 40) of the hook (6) and handle (4).
